# EUROPÄISCHE PATENTANMELDUNG

(11) **EP 1 810 902 A2**
(43) Veröffentlichungstag der Anmeldung: **25.07.2007**
(21) Anmeldenummer: 07100021.0
(22) Anmeldetag: 02.01.2007
(51) Int. Cl.: B60T 8/36, F16K 31/06

(54) **Magnetventil**

(30) Priorität: 19.01.2006 DE 102006002638
(71) Anmelder: ROBERT BOSCH GMBH, 70442 Stuttgart (DE)
(72) Erfinder: Kratzer, Dietmar, 71732 Tamm (DE)

(57) **Zusammenfassung**

Die Erfindung betrifft ein Magnetventil mit einem Ventileinsatz (1) und einem im Ventileinsatz (1) beweglich geführten Stößel (2) mit einer Dichtkalotte (2.1), welche dichtend in einen Dichtsitz (10) eines Ventilkörpers (4) eintaucht, wobei der Stößel (2) gegen die Federkraft einer Rückstellfeder (3) bewegbar ist. Erfindungsgemäß ist eine außerhalb eines Strömungswegs in einer Bohrung (1.1) des Ventileinsatzes (1) angeordnete Abstützbuchse (41) vorhanden, welche die Rückstellfeder (3) aufnimmt, abstützt und von außen radial führt.

## Beschreibung

### Stand der Technik

Die Erfindung geht aus von einem Magnetventil nach der Gattung des unabhängigen Patentanspruchs 1.

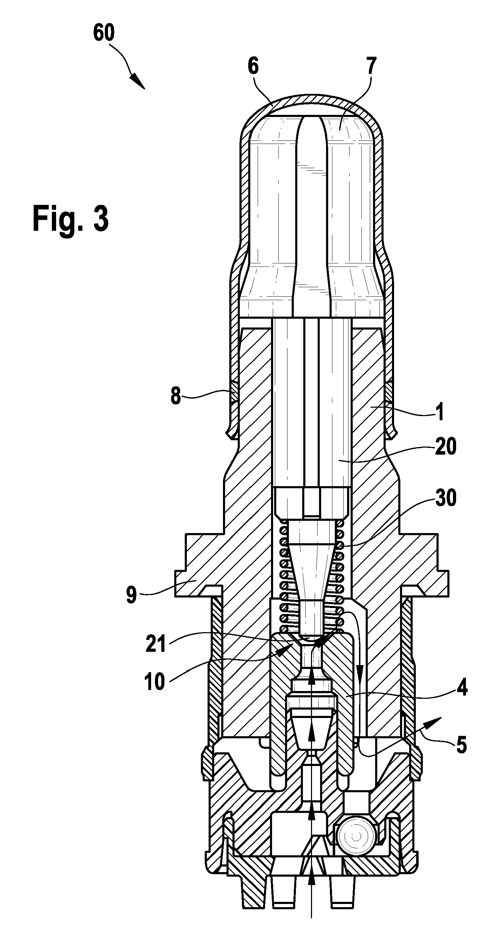

Ein herkömmliches Magnetventil, insbesondere für ein Hydraulikaggregat, welches beispielsweise in einem Antiblockiersystem (ABS) oder einem Antriebsschlupfregelsystem (ASR-System) oder einem elektronischen Stabilitätsprogrammsystem (ESP-System) eingesetzt wird, ist in Figur 3 dargestellt. Wie aus Figur 3 ersichtlich ist, umfasst das herkömmliche stromlos offene Magnetventil 60 neben einer nicht dargestellten Magnetbaugruppe eine Ventilpatrone, welche eine Kapsel 6, einen Ventileinsatz 1, einen Stößel 20 mit einer Dichtkalotte 21, eine Rückstellfeder 30 und einen Anker 7 umfasst. Bei der Herstellung des Magnetventils 60 werden die Kapsel 6 und der Ventileinsatz 1 der Ventilpatrone durch Pressen aufeinander gefügt und durch eine Dichtschweißung 8 wird die Ventilpatrone hydraulisch gegenüber der Atmosphäre abgedichtet. Zusätzlich nimmt der Ventileinsatz 1 die im hydraulischen System auftretenden Druckkräfte auf und leitet diese über einen Verstemmflansch 9 an einen nicht dargestellten Verstemmbereich auf einem Fluidblock weiter. Zudem nimmt der Ventileinsatz 1 den so genannten Ventilkörper 4 auf, welcher einen Ventilsitz 10 umfasst, in welchen der die Dichtkalotte 21 des Stößels 20 dichtend eintaucht, um die Dichtfunktion des Magnetventils 60 umzusetzen. Wie weiter aus Figur 3 ersichtlich ist, werden der Stößel 20 und die Rückstellfeder 30 im Ventileinsatz 1 geführt, wobei der Stößel 20 in einer Stößelführung geführt ist und die Rückstellfeder 30 an einem Ende auf dem Stößel 20 radial geführt und zentriert ist und am anderen Ende auf dem Ventilkörper 4 axial geführt aufliegt. Der Strömungsweg des Fluids durch das Magnetventil ist schematisch durch eine Pfeilkette 5 dargestellt. Wegen der einfachen Montage ist der Einbauort der Rückstellfeder 30 meist im hauptsächlich durchströmten Raum, d.h. im Bereich der Durchströmung 5 des Betriebsmediums angeordnet. Somit wirkt die Federkraft der Rückstellfeder 30 im Bereich der Strömungskräfte, welche aufgrund der Strömung auf die Windungen der Rückstellfeder 30 wirken.

Dadurch kann es zu einer unerwünschten Beeinflussung des Federverhaltens durch die Strömung kommen. Diese Einflüsse können z.B. Strömungs- und Umlenkkräfte an den Federwindungen, veränderliche Strömung an veränderlichen Windungsabständen usw. sein. Diese Einflüsse sind unbekannt, veränderlich und schwer zu berechnen. So kann es beispielsweise zum Abheben der Rückstellfeder 30 von ihrer Auflage am Ventilkörper 4 kommen, was mit einer entsprechenden (Kraft-)Wirkung auf den Ventilstößel 20 und einer unerwünschter Beeinflussung der Ventilfunktion verbunden sein kann. Des Weiteren kann die ungeführte Rückstellfeder 30 seitlich ausgelenkt oder versetzt werden, so dass es zu Berührungen und damit zu Reibkräften zwischen dem Ventileinsatz 1 und dem Stößel 20 kommen kann. Durch die erzeugten Reibkräfte kann das Ventilverhalten negativ beeinflusst werden und der Stößel 20 kann durch die evtl. gratbehafteten Federenden beschädigt werden.

### Vorteile der Erfindung

Das erfindungsgemäße Magnetventil mit den Merkmalen des unabhängigen Patentanspruchs 1 hat demgegenüber den Vorteil, dass außerhalb eines Strömungswegs in einer Bohrung des Ventileinsatzes eine Abstützbuchse angeordnet ist, welche die Rückstellfeder aufnimmt, abstützt und von außen radial führt. Durch die örtliche Trennung können in vorteilhafter Weise Wechselwirkungen zwischen der Rückstellfeder und der Strömung stark verringert werden, wodurch das Verhalten des Ventils einfacher verständlich und vorhersehbar wird. Zudem wird die Rückstellfeder durch die Anordnung in der Abstützbuchse von außen radial im Ventileinsatz geführt und zentriert, so dass in vorteilhafter Weise verhindert werden kann, dass die Rückstellfeder aufgrund von Kraftwirkungen, wie z.B. Querkräften, welche auf die Windungen der Rückstellfeder wirken, seitlich ausbricht, oder von einer Auflage abhebt bzw. die Windungen der Rückstellfeder relativ zueinander in Bewegung bzw. in Schwingungen versetzt werden.

Durch die in den abhängigen Ansprüchen aufgeführten Maßnahmen und Weiterbildungen sind vorteilhafte Verbesserungen des im unabhängigen Patentanspruch angegebenen Magnetventils möglich.

Besonders vorteilhaft ist, dass die Abstützbuchse zur Kraftübertragung über einen Formschluss und/oder einen Kraftschluss mit dem Ventileinsatz gekoppelt ist. So ist die Abstützbuchse in die Bohrung des Ventileinsatzes eingeführt und stützt sich beispielsweise mittels Formschluss über einen Bund auf einer oberen Stirnfläche des Ventileinsatzes ab. Zusätzlich oder alternativ kann die Abstützbuchse mittels Kraftschluss in die Bohrung des Ventileinsatzes eingepresst werden, wodurch die Kraftübertragung zwischen der Abstützbuchse und dem Ventileinsatz weiter verbessert wird. Die erfindungsgemäße Abstützbuchse ermöglicht, dass die Rückstellfeder in vorteilhafter Weise aus dem hauptsächlich durchströmten Raum entfernt werden kann und die meisten der anderen beteiligten und bewährten Komponenten des Magnetventils unverändert übernommen werden können. Im Wesentlichen wird der Stößel an die Verwendung der Abstützbuchse angepasst.

In Ausgestaltung des erfindungsgemäßen Magnetventils umfasst die Abstützbuchse Mittel, vorzugsweise Schlitze oder Unterbrechungen, für einen Volumenausgleich mit einem Ankerraum. Die Abstützbuchse ist beispielsweise als Kunststoffspritzteil ausgeführt.

### Zeichnung

Vorteilhafte, nachfolgend beschriebene Ausführungsformen der Erfindung sowie das zu deren besserem Verständnis oben erläuterte, herkömmliche Ausführungsbeispiel sind in den Zeichnungen dargestellt. Es zeigen:
- Figur 1: eine schematische Schnittdarstellung eines Ausführungsbeispiels eines erfindungsgemäßen Magnetventils,
- Figur 2: eine schematische Schnittdarstellung eines weiteren Ausführungsbeispiels eines erfindungsgemäßen Magnetventils, und
- Figur 3: eine schematische Schnittdarstellung eines herkömmlichen Magnetventils.

### Beschreibung

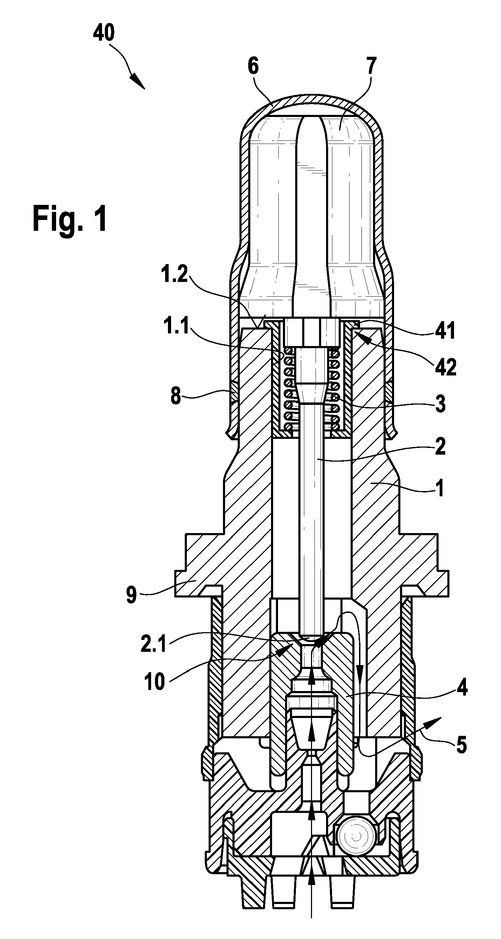

Wie aus Figur 1 ersichtlich ist, umfasst ein Ausführungsbeispiel eines erfindungsgemäßen Magnetventils 40 analog zum herkömmlichen Magnetventil 60 gemäß Figur 3 neben einer nicht dargestellten Magnetbaugruppe eine Ventilpatrone, welche eine Kapsel 6, einen Ventileinsatz 1, einen Stößel 2 mit einer Dichtkalotte 2.1, eine Rückstellfeder 3 und einen Anker 7 umfasst. Die Kapsel 6 und der Ventileinsatz 1 der Ventilpatrone werden durch Pressen aufeinander gefügt und durch eine Dichtschweißung 8 hydraulisch gegenüber der Atmosphäre abgedichtet. Zusätzlich nimmt der Ventileinsatz 1 die im hydraulischen System auftretenden Druckkräfte auf und leitet diese über einen Verstemmflansch 9 an einen nicht dargestellten Verstemmbereich auf einem Fluidblock weiter. Zudem nimmt der Ventileinsatz 1 den so genannten Ventilkörper 4 auf, welcher einen Ventilsitz 10 umfasst, in welchen die Dichtkalotte 2.1 des Stößels 2 dichtend eintaucht, um die Dichtfunktion des Magnetventils 40 umzusetzen. Der Strömungsweg des Fluids durch das Magnetventil 40 ist schematisch durch eine Pfeilkette 5 dargestellt.

Wie weiter aus Figur 1 ersichtlich ist, ist der Stößel 2 mit der Dichtkalotte 2.1 beweglich im Ventileinsatz 1 geführt. Der Stößel 2 ist gegen die Federkraft der Rückstellfeder 3 bewegbar, welche außerhalb des Strömungswegs 5 von einer Abstützbuchse 41 aufgenommen, abgestützt und von außen radial geführt wird. Die Abstützbuchse 41 ist als Kunststoffspritzteil ausgeführt und in einer Bohrung 1.1 des Ventileinsatzes 1 angeordnet. Im dargestellten Ausführungsbeispiel ist die Abstützbuchse 41 in die Bohrung 1.1 des Ventileinsatzes 1 eingeführt und stützt sich mittels Formschluss 42 über einen Bund auf einer oberen Stirnfläche 1.2 des Ventileinsatzes 1 ab. Zudem umfasst die Abstützbuchse 41 nicht dargestellte Mittel, vorzugsweise Schlitze oder Unterbrechungen, für einen Volumenausgleich mit einem Ankerraum.

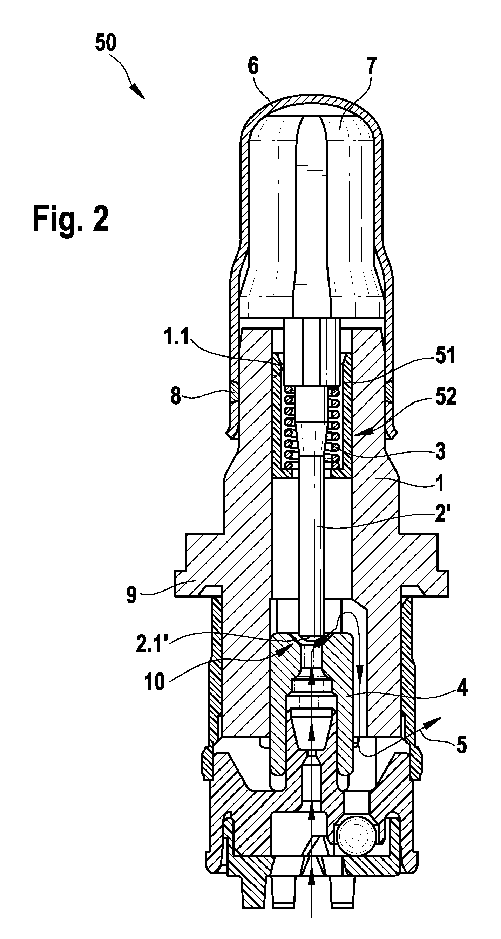

Wie aus Figur 2 ersichtlich ist, umfasst ein anderes Ausführungsbeispiel eines erfindungsgemäßen Magnetventils 50 analog zum erfindungsgemäßen Magnetventil 40 gemäß Figur 1 neben einer nicht dargestellten Magnetbaugruppe eine Ventilpatrone, welche eine Kapsel 6, einen Ventileinsatz 1, einen Stößel 2' mit einer Dichtkalotte 2.1', eine Rückstellfeder 3 und einen Anker 7 umfasst. Der Ventileinsatz 1 nimmt den Ventilkörper 4 auf, welcher einen Ventilsitz 10 umfasst, in welchen die Dichtkalotte 2.1' des Stößels 2' dichtend eintaucht, um die Dichtfunktion des Magnetventils 50 umzusetzen. Der Strömungsweg des Fluids durch das Magnetventil 50 ist schematisch durch eine Pfeilkette 5 dargestellt. Der beweglich im Ventileinsatz 1 geführte Stößel 2' mit Dichtkalotte 2.1' ist gegen die Federkraft der Rückstellfeder 3 bewegbar, welche außerhalb des Strömungswegs 5 von einer Abstützbuchse 51 aufgenommen, abgestützt und von außen radial geführt wird. Die Abstützbuchse 51 gemäß Figur 2 ist analog zur Abstützbuchse 41 gemäße Figur 1 als Kunststoffspritzteil ausgeführt und in der Bohrung 1.1 des Ventileinsatzes 1 angeordnet. Im dargestellten Ausführungsbeispiel ist die Abstützbuchse 51 mittels Kraftschluss 52 in die Bohrung 1.1 des Ventileinsatzes 1 eingepresst. Auch die Abstützbuchse 51 umfasst nicht dargestellte Mittel, vorzugsweise Schlitze oder Unterbrechungen, für einen Volumenausgleich mit einem Ankerraum.

Die beschriebenen erfindungsgemäßen Ausführungsformen trennen die Rückstellfeder örtlich von der Strömung, wodurch in vorteilhafter Weise Wechselwirkungen stark verringert werden können. Dies ermöglicht, dass das Verhalten des Ventils einfacher verständlich und vorhersehbar wird. Zudem wird die Rückstellfeder durch die Anordnung in der Abstützbuchse von außen radial im Ventileinsatz geführt und zentriert, so dass in vorteilhafter Weise verhindert werden kann, dass die Rückstellfeder aufgrund von Kraftwirkungen, wie z.B. Querkräften, welche auf die Windungen der Rückstellfeder wirken, seitlich ausbricht, oder von einer Auflage abhebt bzw. die Windungen der Rückstellfeder relativ zueinander in Bewegung bzw. in Schwingungen versetzt werden.

## Patentansprüche

1. Magnetventil mit einem Ventileinsatz (1) und einem im Ventileinsatz (1) beweglich geführten Stößel (2, 2', 20) mit einer Dichtkalotte (2.1, 2.1', 21), welche dichtend in einen Dichtsitz (10) eines Ventilkörpers (4) eintaucht, wobei der Stößel (20) gegen die Federkraft einer Rückstellfeder (3, 3', 30) bewegbar ist, **gekennzeichnet durch** eine außerhalb eines Strömungswegs in einer Bohrung (1.1) des Ventileinsatzes (1) angeordnete Abstützbuchse (41, 51), welche die Rückstellfeder (3, 3') aufnimmt, abstützt und von außen radial führt.

2. Magnetventil nach Anspruch 1, **dadurch gekennzeichnet, dass** die Abstützbuchse (41, 51) über einen Formschluss (42) und/oder einen Kraftschluss (52) mit dem Ventileinsatz (1) gekoppelt ist.

3. Magnetventil nach Anspruch 1 oder 2, **dadurch gekennzeichnet, dass** die Abstützbuchse (41) in die Bohrung (1.1) des Ventileinsatzes (1) eingeführt ist, und sich mittels Formschluss (42) über einen Bund auf einer oberen Stirnfläche (1.2) des Ventileinsatzes (1) abstützt.

4. Magnetventil nach einem der Ansprüche 1 bis 3, **dadurch gekennzeichnet, dass** die Abstützbuchse (51) mittels Kraftschluss (52) in die Bohrung (1.1) des Ventileinsatzes (1) eingepresst ist.

5. Magnetventil nach einem der Ansprüche 1 bis 4, **dadurch gekennzeichnet, dass** die Abstützbuchse (41, 51) Mittel, vorzugsweise Schlitze oder Unterbrechungen, für einen Volumenausgleich mit einem Ankerraum umfasst.

6. Magnetventil nach einem der Ansprüche 1 bis 5, **dadurch gekennzeichnet, dass** die Abstützbuchse (41, 51) als Kunststoffspritzteil ausgeführt ist.
